# EUROPÄISCHE PATENTSCHRIFT

(11) **EP 0 380 754 B1**
(45) Veröffentlichungstag und Bekanntmachung des Hinweises auf die Patenterteilung: **15.11.1995**
(21) Anmeldenummer: 89118126.5
(22) Anmeldetag: 29.09.1989
(51) Int. Cl.: F16K 39/02

(54) **Kraftausgeglichenes Hubventil**
Force-balanced lift valve
Soupape de levage à force équilibrée

(30) Priorität: 28.01.1989 DE 8900960 U
(43) Veröffentlichungstag der Anmeldung: 08.08.1990
(73) Patentinhaber: KUHNKE GmbH, D-23714 Malente (DE)
(72) Erfinder: Gössner, Matthias, Dipl.-Ing., D-2427 Malente (DE); Trenkmann, Joachim, Dipl.-Ing., D-2300 Kiel/Ellerbek (DE); Bungeroth, Lutz, Dipl.-Ing., D-2440 Oldenburg/Holstein (DE); Thomsen, Uwe, D-2427 Malente (DE); Leu, Peter, Dipl.-Ing., D-7306 Denkendorf (DE)
(74) Vertreter: Wilcken, Thomas, Dipl.-Ing.

(56) Entgegenhaltungen:
- DE-A- 2 903 296
- DE-B- 1 084 537
- FR-A- 1 193 775
- FR-A- 2 171 342
- US-A- 3 214 134
- US-A- 3 635 247

## Beschreibung

Die Erfindung geht aus von einem kraftausgeglichenen Hubventil zur Steuerung von Fluiden gemäß dem Oberbegriff des Patentanspruches 1.

In der DE-A-20 45 929 ist ein Mehrwege-Hubventil der vorstehend angegebenen Art beschrieben. Dieses bekannte Hubventil ist nur in seinen Endstellungen, das heißt Schließstellungen, kraftausgeglichen, nicht aber in seinen Zwischenstellungen, so daß das Ventil zur sicheren Überwindung dieser Stellungen mit einer höheren elektrischen Leistung betrieben werden muß, um aufgrund des unausgeglichenen Kräfteverhältnisses eine sichere Funktion des Ventiles zu gewährleisten. Des weiteren besteht aufgrund der erforderlichen Ringdichtungen zwischen dem Ventilschaft und dem Gehäuse des Ventils ein relativ hoher Reibungswiderstand zwischen diesen Teilen, der ebenfalls eine höhere Betätigungsleistung des Ventilantriebs erfordert, was dann als besonders nachteilig ins Gewicht fällt, wenn die Baugröße des Ventils sehr klein ist. Ein weiterer Nachteil bei diesem Ventil besteht darin, daß dessen Durchflußleistung relativ gering ist, was zu einem beträchtlichen Anteil darauf zurückzuführen ist, daß das Ventil nur mit einem begrenzten Druck und begrenzten Strömungsquerschnitten betrieben werden kann.

Ein anderes kraftausgeglichenes Hubventil ist in der FR-A-1 193 775 beschrieben. Bei diesem Ventil ist der axial bewegliche Ventilschaft entweder mittels radial pressend wirksamer Dichtungsmittel oder mittels eines eingespannten Dichtungsmittels im Ventilgehäuse vorgesehen. Im erstgenannten Fall spielt die Reibung zwischen dem Ventilschaft und dem Ventilgehäuse bei kleinbauenden Ventilen eine herausragende Rolle und bestimmt wesentlich insbesondere die Antriebsleistung für die Einheit aus Ventilkörper und Ventilschaft trotz der Tatsache, daß diese Einheit fluidisch kraftausgeglichen ist, da die radialen Dichtungskräfte der Dichtungsmittel eine im Verhältnis sehr hohe Reibung erzeugen. Im zweitgenannten Fall, erste Ausführungsform, hat ein fest eingespannter, membranartiger Dichtungsring folgende Nachteile: Es ist relativ viel Einbauplatz für seine Einspannbefestigung und größere Abmessungen für die Hubentlastungsgeometrie nötig, es sind radiale Spannungen an seinen Einspannrändern gegeben, bei Druckbeaufschlagung entsteht eine erhebliche Walkarbeit in seiner gewölbten Ring- bzw. Faltenausformung, es ist Verschleiß durch seine innere Materialreibung gegeben und durch seine Verformung entsteht bei seiner Axialbewegung aufgrund seiner Form und Einspannung eine zusätzliche, bewegungshemmende Kraftkomponente. Diese Faktoren bedingen neben größeren Abmessungen eine Schwerfälligkeit in der axialen Bewegung des Ventilschaftes. Bei der zweiten Ausführungsform ist ein Faltenbalg vorgesehen, der einerseits am Ende des Ventilschaftes und andererseits in axialer Fortsetzung am Ventilgehäuse montiert ist. Die Faltenbalgabdichtung des im übrigen nicht geführt gelagerten Ventilkörpers mit der Folge einer unsicheren Positionierung seines Ventilkörpers auf dem Ventilsitz bewirkt einen erheblichen Bewegungswiderstand, und zwar wegen der inneren Reibung in den Falten des Balges.

Ein weiteres Hubventil mit einer kraftausgeglichenen Konstruktion ist in der GB-A-2 164 423 beschrieben. Dieses Ventil besitzt nur eine Auf-Zu-Funktion für eine einzige Ventilöffnung, und dessen Schließstellung ist mittels eines Kolbens kraftausgeglichen, der entgegen dem Ventilteller mit dem Druckfluid beaufschlagt wird. Auch hier sind im wesentlichen die vorstehend genannten Nachteile vorhanden, wobei des weiteren nachteilig ist, daß am Kraftausgleichskolben bei Offenstellung des Ventiltellers weiterhin eine Kraft wirkt, die eine entsprechend hohe Leistung des Ventilantriebs erfordert, um das Ventil in seiner Offenstellung zu halten. Außerdem bedingt der Ventilteller erhöhte Herstellungskosten, da in ihm komplizierte Nebenströmungswege für das zum Ausgleichskolben strömende Druckfluid vorgesehen sind.

In der DE-B 1 082 785 ist ebenfalls ein Hubventil mit Kraftausgleich beschrieben. Dieses nur eine einzige Ventilöffnung aufweisende Ventil ist zwar in seinen beiden Endstellungen kraftausgeglichen, jedoch wegen seiner Gesamtkonzeption und insbesondere wegen seines Ventilkörperbaus nicht in Anlagen mit miniaturisierten Schaltbausteinen zu verwenden.

Die Aufgabe der Erfindung besteht in der Schaffung eines in allen Stellungen kraftausgeglichenen Hubventils, das gegenüber den bekannten Hubventilen mittels einer einfachen Konstruktion in seiner Baugröße wesentlich verkleinert ist, eine erheblich gesteigerte fluidische Durchflußleistung bei geringem Ventilkörperhub ermöglicht und eine beträchtlich verringerte Betätigungsleistung benötigt.

Die Lösung dieser Aufgabe ist in dem Patentanspruch 1 angegeben.

Das erfindungsgemäße Hubventil ist bei einfacher Konstruktion in allen Stellungen seines Ventilkörpers oder seiner Ventilkörper kraftausgeglichen und weist ferner praktisch reibungsfrei gelagerte, den oder die Ventilkörper tragende Ventilschäfte auf, so daß eine erheblich verringerte Antriebsleistung für den Antrieb der Ventilschäfte einschließlich des oder der Ventilkörper benötigt wird. Weiterhin können die Durchströmungsquerschnitte im Ventil größer ausgeführt werden, so daß sich in Verbindung mit dem Vorteil kleiner Ventilkörperhübe eine wesentlich gesteigerte fluidische Durchflußleistung ergibt. Somit ist es möglich, die Baugröße der hauptsächlich in der Steuerungstechnik eingesetzten Ventile nach der Erfindung gegenüber bekannten Ventilen weiter zu verkleinern und trotzdem demgegenüber eine gesteigerte Durchflußleistung zu erzielen. Ein weiterer Vorteil besteht darin, daß das Ventil aufgrund seines Aufbaus innerhalb eines sehr großen Druckbereichs betrieben werden kann, und zwar von Vakuum bis 1,6 MPa und ggf. auch höher, ohne daß hierdurch die geringe elektrische Antriebsleistung beeinflußt ist.

Eine bevorzugte Ausführungsform besteht darin, daß das oder die Dichtungsmittel aus einer ringförmigen Flachdichtung bestehen und daß zwei sich im wesentlichen in einer gemeinsamen Radialebene gegenüberliegende Ringnuten in dem zugehörigen Ventilschaft und in dem Gehäuse vorgesehen sind, wobei sich die Flachdichtung lose in beide Ringnuten erstreckt. Bei dieser Ausführungsform wird mit einer sehr einfachen Konstruktion eine reibungsfreie Abdichtung zwischen den axial beweglichen Ventilteilen und dem Ventilgehäuse gegenüber einem Auslaß oder Einlaß des Ventilgehäuses erreicht.

Die Erfindung ist nachstehend anhand mehrerer, in den anliegenden Zeichnungen schematisch dargestellter Ausführungsbeispiele näher erläutert. Es zeigen:
- Fig. 1 und 2: ein erstes Ausführungsbeispiel im wesentlichen im Axialschnitt und in beiden Endstellungen,
- Fig. 3: eine Einzelheit eines Dichtungsauffiaus aus Fig. 1,
- Fig. 4 und 5: ein zweites Ausführungsbeispiel im wesentlichen im Axialschnitt und in beiden Endstellungen,
- Fig. 6: eine Einzelheit eines Dichtungsaufbaus aus Fig. 4,
- Fig. 7: eine Alternative zu Fig. 6,
- Fig. 8: ein weiteres Ausführungsbeispiel im Axialschnitt.

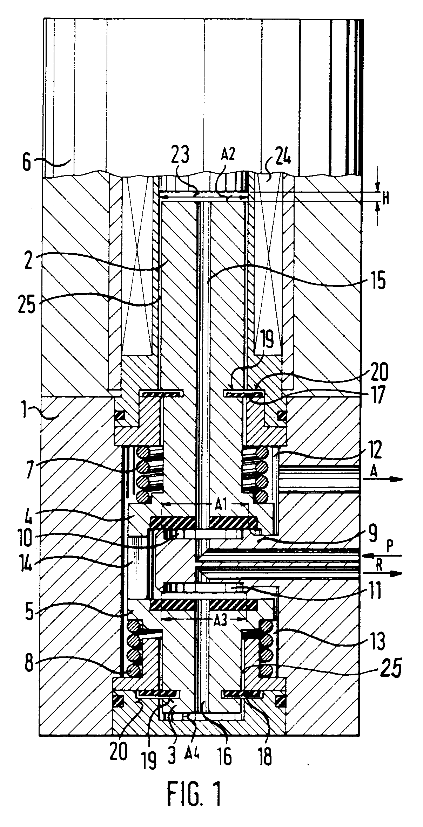

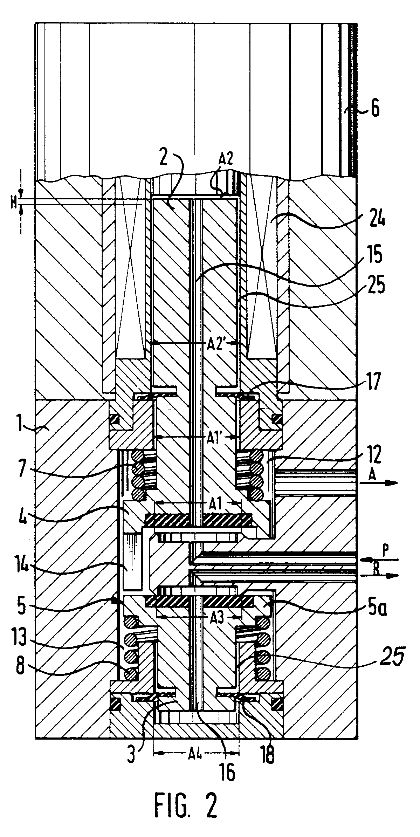

Das Hubventil nach Fig. 1 besteht hauptsächlich aus einem Gehäuse 1, aus zwei darin axial und gleichsinnig beweglich gelagerten Ventilschäften 2 und 3 mit Ventilkörpern 4 bzw. 5, aus einem üblichen elektromagnetischen Antrieb 6, dessen Anker teilweise in Form des einen Schaftes 2 ausgebildet ist, aus zwei wendelförmigen Druckfedern 7 und 8, die die Ventilkörper 4 undf 5 prinzipiell in ihre Schließstellung drücken, wobei die Kraft der Feder 7 diejenige der Feder 8 überwiegt, wie Fig. 1 zeigt, und aus mehreren üblichen Fluidanschlußwegen P, A und R. Durch einen inneren Vorsprung 9 des Gehäuses 1, der Ventilöffnungen 10 und 11 für die beiden Ventilkörper 4 und 5 aufweist, zu denen die Anschlußwege P und R führen, ist der Innenraum des Ventilgehäuses praktisch in zwei axial gegenüberliegende Kammern 12 und 13 aufgeteilt. Die beiden Ventilkörper 4, 5 werden z.B. durch mehrere, stabförmige, umfangsmäßig verteilte Distanzmittel 14 voneinander auf Abstand gehalten, so daß dadurch der untere Ventilkörper 5 in seiner Offenstellung gehalten wird, wenn sich der obere Ventilkörper 4 in seiner Schließstellung befindet, wie Fig. 1 zeigt. Die Distanzmittel sind z. B. im gezeigten Fall am oberen Ventilkörper 4 befestigt und heben sich vom unteren Ventilkörper 5 ab, wenn sich dieser in Schließstellung befindet, wie Fig. 2 zeigt. Hierdurch wird sichergestellt, daß unter Berücksichtigung der Toleranzen während der Fertigung des Hubventils der untere Ventilkörper 5 sicher schließen kann, wenn der obere Ventilkörper 4 seinen maximalen Hub zur Erreichung seiner Offenstellung zurückgelegt hat.

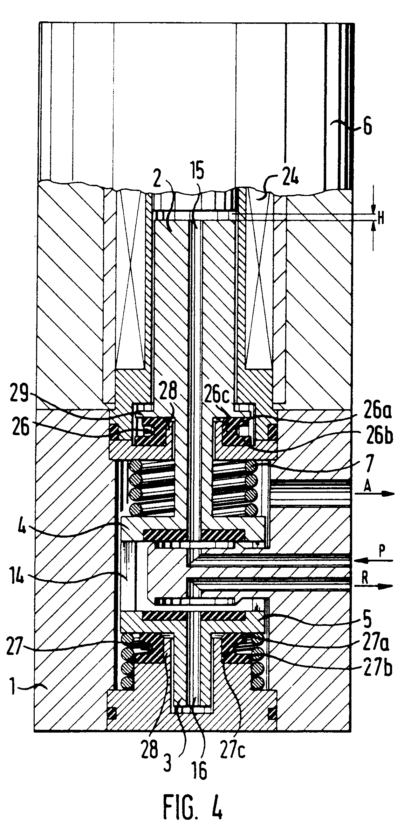

Jeder Ventilkörper und jeder Ventilschaft ist mit einem zentralen Nebenkanal 15 bzw. 16 versehen, der jede Ventilöffnung 10, 11 mit der entsprechenden Rückseite des Ventilschaftes verbindet, so daß Druckfluid auf die jeweilige Rückseite gelangen kann, wie z. B. aus den Fig. 1 und 4 klar ersichtlich ist.

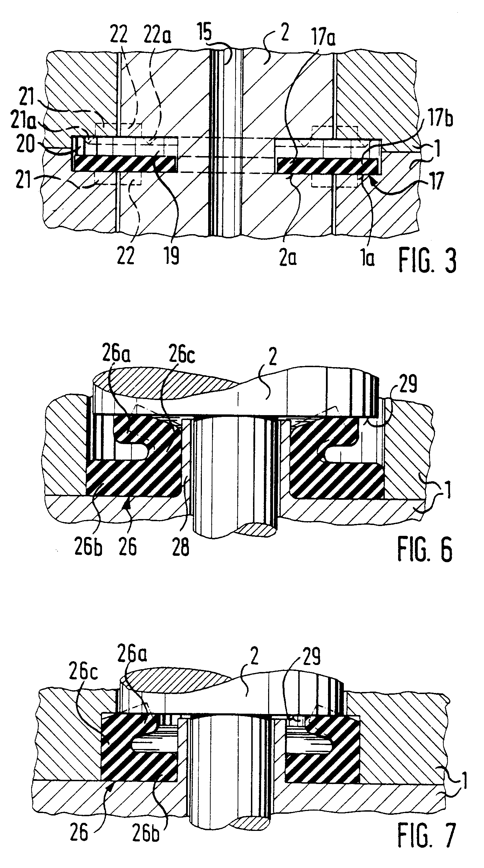

Um einen üblichen Spalt 25 zwischen den Ventilschäften 2 und 3 und dem Gehäuse 1 gegenüber den Fluidanschlüssen A bzw. B des Gehäuses abzudichten, sind Dichtungsmittel in Form von ringförmigen Flachdichtungen 17, 18 aus elastischem Material zur praktisch reibungsfreien Fluidabdichtung vorgesehen. Hierzu sind in den Fig. 1, 2 und 3 in jedem Ventilschaft und in den entsprechenden Gehäuseteilen radiale Ringnuten 19, 20 in einer gemeinsamen Radialebene ausgebildet, wobei sich die Flachdichtungen je in beide Nuten ihres Nutenpaares hinein erstrecken. In einer Weitergestaltung können die Ringnuten 19, 20 zu ihrem offenen Ende hin je mit kleinen ringförmigen, nur in Fig. 3 gestrichelt angedeuteten Absätzen 21, 22 versehen sein, deren gemeinsame Breite kleiner ist als die Breite der jeweiligen Flachdichtung 17 bzw. 18. Hierdurch werden insbesondere mehrere Dichtkanten ausgebildet, die die Abdichtwirkung erhöhen.

Um den Ventilkörper 4 sowohl in seinen beiden Endstellungen (Schließstellung und Offenstellung) als auch in jeder beliebigen Zwischenstellung kraftausgeglichen zu haben, muß der effektiven Querschnittsfläche A1 der Ventilöffnung 10 eine gleichgroße Kompensationsfläche A2, die über den Nebenkanal 15 durch das Druckfluid erreichbar ist, entgegenwirken, die sich nach dem Durchmesser einer Bohrung 23 bemißt, in welcher der Schaft 2 mit ausreichend Spiel axial beweglich ist. Entsprechend sind die Verhältnisse am unteren Ventilkörper 5 bzw. Ventilschaft 3 ausgebildet; auch hier steht der den Ventilkörper belastenden, effektiven Fläche A3 der Ventilöffnung 11 die gleichgroße Kompensationsfläche A4 am anderen Ende des Ventilschaftes 3 entgegen.

In Fig. 1 ist die elektrische Spule 24 des Antriebes 6 stromlos, so daß sich der Ventilkörper 4 durch die Kraft der Feder 7 in Schließstellung befindet, und zwar gegen den Fluiddruck am Anschluß P. Über den Nebenkanal 15 drückt ebenfalls Fluid mit dem gleichen Druck gegen die Fläche A2 und über den Ringspalt 25 gegen die obere Seite der Flachdichtung 17, die somit die darunter befindliche Kammer 12 abdichtet. Die miteinander kommunizierenden Kammern 12 und 13 sind über den Anschluß R entlüftet. Der untere Ventilkörper 5 befindet sich durch die Kraft der Feder 8 in Offenstellung.

Fig. 2 zeigt die elektrische Spule 24 des Antriebes 6 im mit Strom versorgten Zustand, das heißt der Ventilschaft 2 ist um den Hub H angehoben und damit der Ventilkörper 4 geöffnet, so daß am Anschluß A das Arbeitsfluid über die Kammer 12 zur Verfügung steht. Da die Flächen A1' und A2' inhaltlich gleichgroß sind, ist der Ventilschaft 2 mit dem Ventilkörper 4 druckentlastet, so daß die Kraft der Spule 24 nur die Kraft der Feder 7 zu überwinden hat. Die untere Kammer 13 enthält ebenfalls Fluid mit dem Druck von Anschluß P, und der in ihr befindliche zweite Ventilschaft 3 mit dem Ventilkörper 5 befindet sich in Schließstellung aufgrund der Kraft der Feder 8, da der Flansch 5a des Ventilkörpers 5 ebenfalls kraftausgeglichen ist. Des weiteren sind die Flächen A3 und A4 über den Entlüftungsanschluß R und den Nebenkanal 16 drucklos, so daß auch in diesem Bereich Kraftausgeglichenheit herrscht.

Fig. 2 zeigt weiterhin, daß die ringförmigen, an sich lose in ihren Sitzen liegenden Flachdichtungen 17 und 18 um den Hub H unter Beibehaltung ihrer dichtenden Anlage an den Ventilschäften und den entsprechenden Gehäuseteilen teilweise axial deformiert sind. Gleichzeitig ist aus Fig. 2 ersichtlich, daß die Flachdichtungen 17, 18 keinerlei, sich zwischen den Ventilschäften und den gegenüberliegenden Gehäuseteilen negativ auswirkende Reibung erzeugen, also reibungsfrei arbeiten. Dies hat zur Folge, daß für die elektrische Spule des Antriebes 24 weniger elektrische Leistung erforderlich ist, was zur Erzielung eines antriebsenergiesparenden und weiter miniaturisierten Hubventils der hier beschriebenen Art von wesentlicher Bedeutung ist.

Hubventile haben den Vorteil, daß mit relativ geringem Hub ein großer Ausströmquerschnitt gegeben ist. Im vorliegenden Fall wird bei solchen Ventilen in Verbindung mit der Kraftausgeglichenheit der Ventilkörper in allen Stellungen, der praktisch reibungsfreien axialen Bewegung der Ventilschäfte, der großen Zuströmquerschnitte der Strömungswege der Anschlüsse P, A und R und Anwendungsmöglichkeit eines erhöhten Fluiddruckes eine beträchtlich gesteigerte fluidische Durchflußleistung erzielt. Dabei ist es möglich, die Gesamtbauabmessungen des beschriebenen Hubventils in Höhe, Breite und Tiefe weiter zu minimieren. So kann ein Minimierungseffekt hinsichtlich des Bauvolumens von etwa 70 % erreicht werden.

Die Fig. 4, 5, 6 und 7 zeigen ein weiteres Ausführungsbeispiel, bei dem ein anderes Konstruktionsbeispiel für die Dichtungsmittel gewählt ist. Im übrigen gleicht dieses Ventilbeispiel dem vorstehend beschriebenen Beispiel, so daß für gleiche Bauteile gleiche Bezugsziffern gelten.

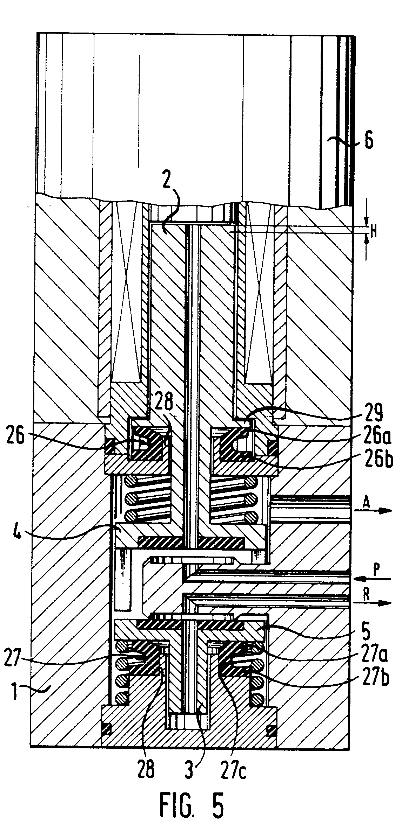

Bei dieser Dichtungskonstruktion umfassen die eigentlichen Dichtungsmittel zwei elastische, U-förmige Dichtungsringe 26 und 27, deren offene Seite radial gerichtet ist, z. B. in den Fig. 4 und 5 radial nach außen, und der höheren Fluidkraft ausgesetzt ist, so daß jeweils die beiden Schenkel 26a und 26b bzw. 27a und 27b der Dichtungsringe auseinandergedrückt werden. Des weiteren umfaßt diese Dichtungskonstruktion je einen ringförmigen, axial vorstehenden Stützkragen 28 des Gehäuses 1, an dem der Stegteil 26c bzw. 27c der Dichtungsringe vorzugsweise mit Festsitz anliegt, so daß auch an dieser Stelle eine Dichtungsanlage gegeben ist. Während der Schenkel 26b bzw. 27b formschlüssig und/oder auch kraftschlüssig mit dem Gehäuse 1 verbunden ist, sich also nicht axial bewegen kann, ist der andere Schenkel 26a bzw. 27a der Dichtungsringe 26 und 27 axial beweglich und bewirkt die Dichtungsfunktion mit axial beweglichen Ventilteilen, das heißt in dem in den Fig. 4 und 5 gezeigten Fall mit dem Ventilschaft und dem Ventilkörper.

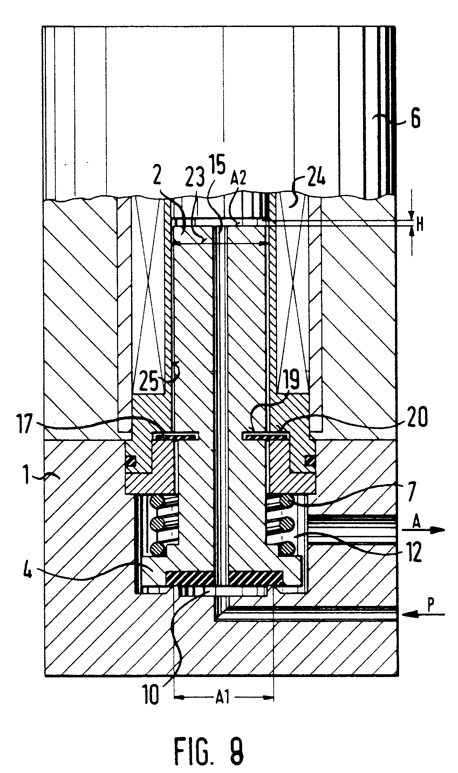

Wie aus Fig. 6 besser zu erkennen ist, verläuft der axial bewegliche Schenkel 26a des Dichtungsringes 26 (und entsprechend auch der Schenkel 27a des Dichtungsringes 27) im nichteingebauten, strichpunktiert angedeuteten Zustand schräge, so daß er im eingebauten Zustand, also bei Vorbelastung, bereits unter Vorspannung steht und abdichtet. Hierzu liegt der axial bewegliche Schenkel 26a bzw. 27a an einer ringförmigen, radialen Anlageschulter 29 des Ventilschaftes 2 oder an der Rückseite des Ventilkörpers 5 an (Fig. 4). Durch den ringförmigen Stützkragen 28 erstreckt sich mit Spiel der jeweilige Ventilschaft 2 bzw. 3 axial hindurch.

Die Dichtungsausbildung gemäß Fig. 7 entspricht mit einer Ausnahme derjenigen nach Fig. 6. Der U-förmige Dichtungsring 26 zeigt hier mit seiner offenen Seite radial nach innen, und zwar für Anwendungsfälle, bei denen die größere Fluidkraft auf der Innenseite des Dichtungsringes herrscht, wobei das Fluid zwischen dem Ventilschaft 2 und dem Stützkragen 28 einströmt. Die Dichtfunktion entspricht ansonsten derjenigen des Beispiels nach Fig. 6.

Wenn der Ventilschaft 2 und der Ventilkörper 5 axial bewegt werden, insbesondere wenn sich gemäß Fig. 5 der Ventilschaft 2 in seine Offenstellung und der Ventilkörper 5 in seine Schließstellung bewegen, machen die beweglichen Schultern 26a und 27a der Dichtungsringe 26, 27 diese Bewegung mit und werden durch den Fluiddruck an die beweglichen Ventilteile 2 und 5 gedrückt und dichten somit ab. Es ist ersichtlich, daß auch hierbei über die Dichtungsringe keine Reibung zwischen dem Gehäuse 1 einerseits und den Ventilschäften 2 und 3 andererseits gegeben ist.

Der übrige Aufbau des Ventils nach den Fig. 4 bis 7 entspricht demjenigen nach den Fig. 1 und 2.

Alternativ zu den ringförmigen Absätzen 21, 22 in den Ringnuten 20 bzw. 19 (Fig. 3) kann auch so vorgegangen werden, daß ringförmige, axiale Vorsprünge 21a bzw. 22a in den Ringnuten 20, 19 vorgesehen sind. Zwar sind in Fig. 3 nur obere Vorsprünge gezeichnet, jedoch ist klar, daß gleichzeitig auch untere derartige Vorsprünge vorgesehen sind. Anstatt daß der flache Dichtring 17 mit seinen radialen Abschnitten 17a und 17b an den Anlageschultern 2a bzw. 1a anliegt, würde er im wesentlichen an den oberen und unteren erwähnten Vorsprüngen dichtend anliegen. Ähnlich den Absätzen 21 und 22 bewirken auch die Vorsprünge 21a, 22a eine erhöhte Dichtungswirkung.

Des weiteren sind in den Fig. 4 bis 7 die U-förmigen Dichtungsringe 26, 27 so beschrieben, daß deren Stegteile 26c, 27c fest am jeweiligen Stützkragen 28 anliegen und daß die unteren Schenkel 26b und 27b unbeweglich sind. Es kann jedoch auch so vorgegangen werden, daß der oder die Dichtungsringe 26, 27 mit gewissem Spiel den axialen Stützkragen gegenüberliegen, so daß sich beide Schenkel jedes Ringes axial bewegen. Auch in diesem Fall erfüllen die Schenkel ihre Dichtungsfunktion voll, da sie durch die Fluidbeaufschlagung auseinandergespreizt werden und sich dadurch an den jeweiligen Anlageschultern dichtend anlegen.

Ein weiteres Ausführungsbeispiel ist in Fig. 8 gezeigt; auch hier gelten gleiche Bezugszeichen für gleiche Bauteile. Im Unterschied zu dem Beispiel nach den Fig. 1 und 2 besitzt das Hubventil nach diesem Beispiel nur einen Ventilkörper 4 mit dem dazugehörigen Ventilschaft 2 in der einzigen Kammer 12. Im übrigen herrscht Baugleichheit. Auch dieses Ventil ist kraftausgeglichen, und ebenfalls ist eine reibungsfreie Abdichtung zwischendem Ventilschaft 2 und dem Gehäuse 1 gegenüber dem Anschluß A gegeben, wobei die Dichtungskonstruktion nach Fig. 3, wie in Fig. 8 gezeigt, oder diejenige nach den Fig. 6 und 7 gewählt werden kann. Die Funktion dieses Ventils gleicht prinzipiell derjenigen des Ventils nach den Fig. 1 und 2. Auch dieses Ventil hat bei kleinem Bauvolumen eine gesteigerte Durchflußleitung und benötigt eine beträchtlich verringerte Antriebsleistung.

Die vorstehend beschriebenen Hubventile können miteinander kombiniert werden. So ist es möglich, mehrere gleichartige Ventile zu einer Anordnung zu kombinieren, z. B. mehrere Ventile nach den Fig. 1, 2 oder 8 miteinander. Es ist auch möglich, unterschiedliche Ventile miteinander zu kombinieren, beispielsweise ein oder mehrere Ventile nach Fig. 1 und 2 mit wenigstens einem Ventil nach Fig. 8. Hierbei sind die miteinander kombinierten Ventile durch innere Strömungswege in gewünschter Weise miteinander verschaltet. Da diese Kombinationsmöglichkeiten sich für den Fachmann ohne weiteres ergeben, ist ein Beispiel nicht gezeichnet.

Schließlich sei noch erwähnt, daß die Fluidanschlüsse miteinander vertauscht werden können. So ist es z. B. möglich, daß bei dem Ventil nach Fig. 1 die beiden Anschlüsse P und A getauscht werden können, so daß die Fluiddruckbeaufschlagung am Anschluß A gegeben ist, so daß dann der Anschluß P den Arbeitsanschluß darstellt.

## Patentansprüche

1. Kraftausgeglichenes Hubventil zum Steuern von Druckfluiden, bestehend aus einem Gehäuse (1) mit Strömungswegen für das Druckfluid, aus wenigstens einem Ventilkörper (4,5), der an wenigstens einem in dem Gehäuse axial beweglich gelagerten Ventilschaft (2,3) vorgesehen ist, zum Öffnen und Schließen von wenigstens einer Ventilöffnung (10,11) des Gehäuses und aus wenigstens einem ringförmigen, elastischen Dichtungsmittel (17,18,26,27) zum Abdichten eines Ringspaltes (25) zwischen dem Ventilschaft (2,3) und dem Gehäuse (1) gegenüber einem Auslaßanschluß (A,R) des Gehäuses, wobei das Dichtungsmittel mit dem Ventilschaft und form- und/ oder kraftschlüssig mit dem Ventilgehäuse in Eingriff steht und wobei einer dem Druck des Druckfluides ausgesetzten Wirkfläche (A1,A3) des Ventilkörpers (4,5) eine kraftausgleichende Kompensationsfläche (A2,A4) an dem dem Ventilkörper abgewandten Ende des Ventilschaftes (2,3) zugeordnet ist, die über einen durch den Ventilschaft verlaufenden Nebenkanal (15,16) mit dem Druckfluid beaufschlagbar ist, dadurch gekennzeichnet, daß das oder jedes ringförmige Dichtungsmittel (17,18,26,27) wenigstens einen axial wirksamen und axial frei beweglichen, dem jeweiligen Ventilschaft (2,3) umfangsmäßig kontaktfrei zugekehrten Radialabschnitt (17a,26a,27a) aufweist und daß der jeweilige Ventilschaft (2,3) mit einer radialen und sich umfangsmäßig erstreckenden Anlageschulter (2a,29) für die axial dichtende Anlage des Radialabschnittes (17a,26a,27a) daran bei anstehendem Druckfluid versehen ist.

2. Hubventil nach Anspruch 1, dadurch gekennzeichnet, daß in dem Gehäuse (1) durch einen inneren Vorsprung (9) zwei sich axial gegenüberliegende, ständig miteinander kommunizierende Kammern (12, 13) ausgebildet sind, daß der Vorsprung (9) zwei sich axial gegenüberliegende Ventilöffnungen (10, 11) aufweist, denen je ein Ventilkörper (4, 5) mit je einem eigenen Ventilschaft (2, 3) axialbeweglich zugeordnet ist und daß wenigstens der eine Ventilkörper (4) mindestens ein Distanzmittel (14) zum Öffnen und Offenhalten des anderen Ventilkörpers (5) aufweist.

3. Hubventil nach Anspruch 2, dadurch gekennzeichnet, daß das Distanzmittel (14) stabförmig ausgebildet ist und in Offenstellung des einen Ventilkörpers (4) und bei Schließstellung des anderen Ventilkörpers (5) von einem der Ventilkörper (4, 5) einen geringfügigen Abstand aufweist.

4. Hubventil nach Anspruch 1 oder 2, dadurch gekennzeichnet, daß das oder jedes Dichtungsmittel (17,18) aus einer ringförmigen Flachdichtung besteht, daß für die Anordnung des jeweiligen Dichtungsmittels (17,18) zwei sich in einer gemeinsamen Radialebene gegenüberliegende Ringnuten (19, 20) in dem jeweiligen Ventilschaft (2, 3) und in dem Gehäuse (1) vorgesehen sind, und daß sich die jeweilige Flachdichtung mit ihrem einen Radialabschnitt (17a) mit Spiel lose in die Ringnut (19) des jeweiligen Ventilschaftes (2,3) und mit ihrem anderen Radialabschnitt (17b) mit Spiel lose in die jeweilige Ringnut (20) des Gehäuses (1) erstreckt.

5. Hubventil nach Anspruch 4, dadurch gekennzeichnet, daß die Ringnuten (19, 20) zu ihrem offenen Ende hin mit kleinen ringförmigen Absätzen (21, 22) versehen sind, deren gemeinsame Breite kleiner ist als die Breite der jeweiligen ringförmigen Flachdichtung (17, 18).

6. Hubventil nach Anspruch 4, dadurch gekennzeichnet, daß die Ringnuten (19, 20) mit ringförmigen, axialen, die Dichtungswirkung erhöhenden Vorsprüngen (21a, 22a) versehen sind.

7. Hubventil nach Anspruch 1 oder 2, dadurch gekennzeichnet, daß das oder jedes Dichtungsmittel (26,27) aus einem im Querschnitt U-förmigen Dichtungsring besteht, dessen offene Seite dem höheren Fluiddruck ausgesetzt ist, daß für den jeweiligen Dichtungsring ein ringförmiger, axial vorstehender Stützkragen (28) des Gehäuses (1) vorgesehen ist, daß sich der jeweilige Ventilschaft (2, 3) durch den Stützkragen hindurcherstreckt, daß der Stegteil (26c,27c) oder die offene Seite des oder jedes U-förmigen Dichtungsringes dem Stützkragen (28) zugekehrt ist und daß der eine, axial bewegliche Schenkel (26a,27a) des jeweiligen Dichtungsringes an einer radialen Anlageschulter (29) des Ventilschaftes (2) bzw. rückseitig am Ventilkörper (5) und der andere, unbewegliche Schenkel (26b,27b) des jeweiligen Dichtungsringes am Gehäuse (1) axialdichtend anliegt.

8. Hubventilanordnung, gekennzeichnet durch die Kombination mehrerer Hubventile nach wenigstens einem der Ansprüche 1 bis 7 miteinander, wobei die Hubventile durch Strömungswege miteinander verschaltet sind.

## Claims

1. A force-balanced lifting valve for the control of pressure fluids, consisting of a housing (1) with flow paths for the pressure fluid, of at least one valve body (4,5) which is provided on at least one valve shaft (2,3) mounted so as to be axially movable in the housing, for the opening and closing of at least one valve opening (10,11) of the housing and of at least one annular, elastic sealing means (17,18,26,27) to seal an annular gap (25) between the valve shaft (2,3) and the housing (1) with respect to an outlet connection (A,R) of the housing, wherein the sealing means is in engagement with the valve shaft and with a form- or force- fit with the valve housing, and wherein there is associated with an effective surface (A1,A3) of the valve body (4,5), exposed to the pressure of the pressure fluid, a force-balancing compensation surface (A2,A4) at the end of the valve shaft (2,3) facing away from the valve body, which compensation surface (A2,A4) is able to be acted upon by the pressure fluid via an auxiliary canal (15,16) running through the valve shaft, characterised in that the or each annular sealing means (17,18,26,27) has at least one axially effective and axially freely movable radial section (17a,26a,27a) facing the respective valve shaft (2,3) free of contact with respect to the circumference, and that the respective valve shaft (2,3) is provided with a radial contact shoulder (2a,29) extending circumferentially for the axially sealing contact of the radial section (17a, 26a, 27a) thereon when the pressure fluid is contiguous.

2. A lifting valve according to Claim 1, characterised in that two chambers (12,13), lying axially opposite each other and communicating constantly with each other, are formed in the housing (1) through an inner projection (9), that the projection (9) has two valve openings (10,11) lying axially opposite each other, with which in each case a valve body (4,5) with in each case its own valve shaft (2,3) is associated so as to be axially movable, and that at least one valve body (4) has at least one spacer means (14) to open and keep open the other valve body (5).

3. A lifting valve according to Claim 2, characterised in that the spacer means (14) is constructed in a bar shape and in the open position of the one valve body (4) and in the closed position of the other valve body (5) has a slight distance from one of the valve bodies (4,5).

4. A lifting valve according to Claim 1 or 2, characterised in that the or each sealing means (17,18) consists of an annular flat seal, that for the arrangement of the respective sealing means (17,18) two annular grooves (19,20) lying opposite each other in a common radial plane are provided in the respective valve shaft (2,3) and in the housing (1), and that the respective flat seal extends with its one radial section (17a) with play loosely into the annular groove (19) of the respective valve shaft (2,3) and with its other radial section (17b) extends with play loosely into the respective annular groove (20) of the housing (1).

5. A lifting valve according to Claim 4, characterised in that the annular grooves (19,20) are provided towards their open end with small annular shoulders (21,22), the joint width of which is smaller than the width of the respective annular flat seal (17,18).

6. A lifting valve according to Claim 4, characterised in that the annular grooves (19,20) are provided with annular, axial projections (21a,22a) increasing the sealing effect.

7. A lifting valve according to Claim 1 or 2, characterised in that the or each sealing means (26,27) consists of a sealing ring which is U-shaped in cross-section, the open side of which is exposed to the higher fluid pressure, that for the respective sealing ring an annular, axially projecting support collar (28) of the housing (1) is provided, that the respective valve shaft (2,3) extends through the support collar, that the cross-piece part (26c,27c) or the open side of the or each U-shaped sealing ring faces the support collar (28) and that the one axially movable shank (26a,27a) of the respective sealing ring lies against a radial contact shoulder (29) of the valve shaft (2) or on the reverse side against the valve body (5) and the other, immovable shank (26b,27b) of the respective sealing ring lies in an axially sealing manner against the housing (1).

8. A lifting valve arrangement, characterised by the combination of several lifting valves according to at least one of Claims 1 to 7 with each other, wherein the lifting valves are cross-connected with each other by flow paths.

## Revendications

1. Soupape à levée, à équilibrage des forces, pour la régulation de fluides sous pression, constituée d'un corps (1) comportant des voies d'écoulement pour le fluide sous pression, d'au moins un obturateur de soupape (4, 5), qui est prévu sur au moins une tige de soupape (2, 3) montée déplaçable axialement dans le corps, pour ouvrir et fermer au moins un orifice de soupape (10, 11) du corps, et d'au moins un moyen d'étanchéité élastique annulaire (17, 28, 26, 27) pour étanchéifier un interstice annulaire (25) entre la tige de soupape (2, 3) et le corps (1) vis-à-vis d'un raccord de sortie (A, R) du corps, le moyen d'étanchéité se trouvant en prise avec la tige de soupape et, par complémentarité de formes et/ou adhérence, avec le corps de soupape et une surface de compensation (A2, A4) équilibrant les forces étant associée à une surface active (A1, A3), exposée à la pression du fluide sous pression, de l'obturateur de soupape (4, 5), a l'extrémité, tournée à l'opposé de l'obturateur de soupape, de la tige de soupape (2, 3), surface de compensation qui peut être sollicitée par le fluide sous pression au travers d'un canal auxiliaire (15, 16) s'étendant à travers la tige de soupape, caractérisée en ce que le moyen d'étanchéité annulaire ou chaque moyen d'étanchéité annulaire (17, 18, 26, 27) présente au moins une section radiale (17a, 26a, 27a) qui est adjacente, sans contact, à la circonférence de la tige de soupape respective (2, 3) et qui est active en direction axiale et est librement mobile en direction axiale, et en ce que la tige de soupape respective (2, 3) est pourvue d'un épaulement d'appui (2a, 29) radial et s'étendant dans le sens de la circonférence, sur lequel la section radiale (17a, 26a, 27a) est destinée à s'appuyer en réalisant une étanchéité en direction axiale, lors de l'apparition du fluide sous pression.

2. Soupape à levée selon la revendication 1, caractérisée en ce que, dans le corps (1), sont formées, par une protubérance intérieure (9), deux chambres (12, 13) situées axialement l'une en face de l'autre et communiquant en permanence l'une avec l'autre, en ce que la protubérance (9) comporte deux orifices de soupape (10, 11) situés axialement l'un en face de l'autre, à chacun desquels est associé, mobile axialement, un obturateur de soupape (4, 5) muni respectivement d'une tige de soupape propre (2, 3), et en ce que l'un au moins (4) des obturateurs de soupape comporte au moins un moyen d'écartement (14) destiné à ouvrir et à maintenir ouvert l'autre obturateur de soupape (5).

3. Soupape à levée selon la revendication 2, caractérisée en ce que le moyen d'écartement (14) est réalisé sous la forme d'un bâtonnet et, dans la position d'ouverture du premier obturateur de soupape (4) et pour la position de fermeture de l'autre obturateur de soupape (5), présente un petit écartement par rapport à l'un des obturateurs (4, 5).

4. Soupape à levée selon la revendication 1 ou 2, caractérisée en ce que le moyen d'étanchéité ou chaque moyen d'étanchéité (17, 18) est constitué par une garniture d'étanchéité plate de forme annulaire, en ce que pour la mise en place de chaque moyen d'étanchéité (17, 18), deux rainures annulaires (19, 20) se faisant face dans un plan radial commun sont ménagées dans la tige de soupape respective (2, 3) et dans le corps (1), et en ce que chaque garniture d'étanchéité plate s'étend librement avec du jeu, par sa première section radiale (17a), dans la rainure annulaire (19) de la tige de soupape respective (2, 3) et s'étend librement avec du jeu, par son autre section radiale (17b), dans la rainure annulaire respective (20) du corps (1).

5. Soupape à levée selon la revendication 4, caractérisée en ce que les rainures annulaires (19, 20) sont pourvues, sur leur extrémité ouverte, de petits gradins annulaires (21, 22), dont la largeur commune est plus petite que la largeur de la garniture d'étanchéité plate annulaire respective (17, 18).

6. Soupape à levée selon la revendication 4, caractérisée en ce que les rainures annulaires (19, 20) sont pourvues de saillies axiales annulaires (21a, 22a), renforçant l'effet d'étanchéité.

7. Soupape à levée selon la revendication 1 ou 2, caractérisée en ce que le moyen d'étanchéité ou chaque moyen d'étanchéité (26, 27) est constitué par une bague d'étanchéité à section transversale en forme de U, dont la face ouverte est exposée à la pression de fluide élevée, en ce que, pour chaque bague d'étanchéité, est prévu un collet de soutien annulaire (28), faisant saillie axialement, du corps (1), en ce que la tige de soupape respective (2, 3) s'étend à travers le collet de soutien, en ce que la branche centrale (26c, 27c) ou la face ouverte de la bague d'étanchéité ou de chaque bague d'étanchéité, en forme de U, est tournée vers le collet de soutien (28) et en ce que l'une des branches latérales (26a, 27a), mobile axialement, de chaque bague d'étanchéité s'applique contre un épaulement d'appui radial (29) de la tige de soupape (2) ou, suivant le cas, contre l'obturateur de soupape (5), au dos de celui-ci, et l'autre branche latérale immobile (26b, 27b) de chaque bague d'étanchéité s'applique, de façon étanche dans le sens axial, contre le corps (1).

8. Système de soupapes à levée, caractérisé par la combinaison mutuelle de plusieurs soupapes à levée selon au moins l'une des revendications 1 à 7, les soupapes à levée étant reliées l'une à l'autre par des voies d'écoulement.
